# EUROPEAN PATENT APPLICATION

(11) **EP 2 615 338 A1**
(43) Date of publication of application: **17.07.2013**
(21) Application number: 11823666.0
(22) Date of filing: 09.09.2011
(51) Int. Cl.: F16J 15/44, F04D 29/08

(54) **SEALING STRUCTURE AND CENTRIFUGAL COMPRESSOR**

(30) Priority: 09.09.2010 JP 2010201803
(71) Applicant: Mitsubishi Heavy Industries, Ltd., Tokyo 108-8215 (JP); Mitsubishi Heavy Industries Compressor Corporation, Minato-ku Tokyo 108-0014 (JP)
(72) Inventor: NAKANIWA Akihiro, Tokyo 108-8215 (JP)
(74) Representative: Bongiovanni, Simone
(86) International application number: PCT/JP2011/070586
(87) International publication number: WO 2012/033192

(57) **Abstract**

Provided is a seal structure (50, 60) configured to seal a clearance (31, 32) with respect to a flow path defined by a rotary body (20) rotated about a central shaft (P) and configured to allow passage of a mainstream, and a stationary body (10) disposed at the rotary body (20) to form the clearance (31, 32), the seal structure including a seal member (51A, 51B) installed at the clearance (31, 32) and configured to divide a fluid introduced from the mainstream into the clearance (31, 32) into a high pressure side and a low pressure side, and a shifting member (52A, 52B) installed at the high pressure side of the fluid in the clearance (31, 32), and configured to allow passage of the fluid and reduce a velocity component in a rotational direction of the rotary body (20) of the velocity component of the fluid.

## Description

### Technical Field

The present invention relates to a seal structure and a centrifugal compressor.
This application claims priority to and the benefit of Japanese Patent Application No. 2010-201803 filed on September 9, 2010, the disclosure of which is incorporated by reference herein.

### Background Art

As is well-known, in a multi-stage centrifugal compressor, a rotor in which a plurality of impellers are attached to a rotary shaft is provided, and a U-shaped flow path having a substantially U-shaped cross-section in which two neighboring impellers are in communication with each other in an axial direction in a casing which is configured to accommodate the rotor is provided, so that the pressure of a mainstream of working gas is increased as it goes from upstream to downstream.

In the multi-stage centrifugal compressor, for example, a clearance is formed between an inner partition wall configured to partition a flow path into a low pressure side (a U-shaped flow path of an upstream side) and a high pressure side (a U-shaped flow path of a downstream side) of a mainstream, and the impeller configured to pass through the mainstream and supply energy. In order to seal the clearance, a seal member (for example, a labyrinth seal) is installed.
In the multi-stage centrifugal compressor having the seal member, since a fluid having a circumferential velocity component, which becomes a swirl flow, applies an exciting force to the rotor when passing through the seal member, the rotor may be unstably vibrated. As a result, noise may be generated, or damage due to a contact between the rotor and peripheral parts may occur.

In the following Patent Document 1, a high pressure fluid is supplied from a diffuser section of the U-shaped flow path to the seal member disposed at the inner partition wall configured to partition the diffuser section. More specifically, a fluid passage in communication with the diffuser section and the seal member is formed at the inner partition wall, a high pressure fluid in the diffuser section is supplied to the seal member, and thus the exciting force negating the swirl flow and applied to the rotor is suppressed.

### Related Art Document

### Patent Document

[Patent Document 1] Japanese Unexamined Patent Application Publication No. 2003-148397

### Summary of the Invention

### Problems to be Solved by the Invention

However, in the related art, since a fluid passage should be formed in the inner partition wall, the configuration becomes complicated and the processing requires effort.

In consideration of the above-mentioned circumstances, the present invention is provided to reduce effort needed for the processing by suppressing the exciting force and simplifying the configuration.

### Means for Solving the Problems

A seal structure according to the present invention for sealing a clearance between a rotary body rotated around an axis and a stationary body disposed adjacent to the rotary body, in which a main stream of a fluid passes through a passage formed by the rotary body and the stationary body, the seal structure including: a seal member installed at the clearance and configured to divide a fluid flowed into the clearance from the mainstream into a high pressure fluid and a low pressure fluid; and a shifting member installed at an area of the high pressure fluid in the clearance, and configured to allow passage of the fluid and reduce a velocity component in a rotational direction of the rotary body in the velocity component of the fluid.
According to the above-mentioned configuration, since the shifting member installed at the high pressure side of the fluid in the clearance between the rotary body and the stationary body and configured to allow passage of the fluid and reduce the velocity component in the rotational direction (hereinafter, simply referred to as a normal rotational direction) of the rotary body is provided, the velocity component in the normal rotational direction of the fluid passing through the shifting member and arriving at the seal member is reduced. Accordingly, since the fluid passes the seal member in a state in which the velocity component in the normal rotational direction is reduced, an exciting force applied to the rotary body can be suppressed.
Further, since the exciting force applied to the rotary body is suppressed by installing the shifting member, in comparison with the case in which a fluid passage is formed at the stationary body, the configuration can be simplified and an effort needed for the processing can be reduced.
In addition, when the fluid passage is formed at the stationary body and the high pressure fluid is supplied to the seal member, since a differential pressure between the high pressure side and the low pressure side of the fluid divided by the seal member is increased, while an amount of the fluid passing through the seal member is increased, according to the above-mentioned configuration, since the differential pressure is reduced in comparison with the case in which the high pressure fluid is supplied to the seal member, the fluid passing through the seal member can be suppressed to a small amount.
Further, the phrase "the velocity component in the rotational direction is reduced" is used to mean that the velocity component in rotational direction becomes a negative value in addition to approaching 0.

In addition, the shifting member may apply a velocity component in a reverse direction of the rotational direction to the fluid.
According to the above-mentioned configuration, since the shifting member applies the velocity component in the reverse direction of the normal rotational direction to the fluid, the velocity component in the normal rotational direction of the fluid can be further reduced, and the exciting force applied to the rotary body can be further suppressed.

Further, the shifting member may be installed at a fluid inlet section into which the fluid flows from the mainstream side to the clearance.
According to the above-mentioned configuration, since the shifting member is installed at the fluid inlet section, the velocity component in the normal rotational direction of the fluid from the fluid inlet section toward the seal member can be reduced by reducing the velocity component in the normal rotational direction of the fluid upon introduction into the clearance. Accordingly, the exciting force generated when the fluid having the velocity component in the normal rotational direction passes between the seal members from the fluid inlet section is reduced, and the exciting force generated upon passing through the seal member is reduced. Accordingly, the exciting force applied to the rotary body can be largely suppressed.

In addition, the shifting member is installed at the stationary body side.
According to the above-mentioned configuration, since the shifting member is installed at the stationary body side, an effect needed for the processing can be further reduced without necessity of adjusting a rotational balance of the rotary body like when the shifting member is installed at the rotary body side.

Further, the shifting member may have a passage block section formed at the rotary body side and configured to block passage of the fluid, and a shifting section formed at the stationary body side, and having a through-hole passing through the mainstream side and the seal member side and formed at a position at which an aperture of the mainstream side is slightly deviated in the reverse direction of the rotational direction with respect to an aperture of the seal member side.
According to the above-mentioned configuration, since the shifting member includes the passage block section configured to block passage of the fluid and the shifting section having the through-hole passing through the mainstream side and the seal member, the velocity component in the reverse direction of the normal rotational direction can be applied to the fluid through a simple configuration.

In addition, the shifting member may be installed at a position of the clearance in which the rotary body and the stationary body oppose each other in the radial direction of the rotary body.
According to the above-mentioned configuration, since the shifting member is installed at a position of the clearance at which the rotary body and the stationary body oppose each other in the radial direction, the velocity component in the normal rotational direction of the fluid can be continuously reduced and an exciting force suppressing effect can be stably obtained without variation in size of the clearance due to a thrust force in the axial direction of the rotary body.

Further, a centrifugal compressor according to the present invention having a flow path defined by the rotary body and the stationary body, wherein the rotary body comprises an impeller having a disc-shaped hub, a plurality of blades extending from the hub, and a shroud configured to cover outer circumferential ends of the plurality of blades, and the stationary body comprises a casing configured to accommodate the impeller, and an inner partition wall configured to partition the flow path into a low pressure side and a high pressure side of the mainstream, the centrifugal compressor comprising: a seal structure according to any one of the above-mentioned configurations, the seal structure configured to seal a first clearance formed between the shroud of the impeller and the inner partition wall.

In addition, the present invention provides a centrifugal compressor having a flow path defined by the rotary body and the stationary body, wherein the rotary body comprises an impeller having a disc-shaped hub and a plurality of blades extending from the hub, and the stationary body comprises a casing configured to accommodate the impeller, and an end partition wall configured to partition the inside and the outside of the casing, the centrifugal compressor comprising: a seal structure according to any one of the above-mentioned configurations, the seal structure configured to seal a second clearance formed between the hub of the impeller and the end partition wall.

Further, the present invention provides a centrifugal compressor having a flow path defined by the rotary body and the stationary body, wherein the rotary body comprises an impeller having a disc-shaped hub, a plurality of blades extending from the hub, and a shroud configured to cover outer circumferential ends of the plurality of blades, and the stationary body comprises a casing configured to accommodate the impeller, an inner partition wall configured to partition the flow path into a low pressure side and a high pressure side of the mainstream, and an end partition wall configured to partition the inside and the outside of the casing, the centrifugal compressor comprising: a seal structure according to any one of the above-mentioned configurations, the seal structure configured to seal a first clearance formed between the shroud of the impeller and the inner partition wall, and a second clearance between the hub of the impeller and the end partition wall.
According to the above-mentioned configurations, the exciting force applied to the rotary body can be suppressed and stably operated, and manufacturing effort can be reduced.
In addition, in comparison with the case in which a high pressure fluid is supplied to the seal member, since a differential pressure between the fluid high pressure side and the fluid low pressure side divided by the seal member is reduced, the fluid passing through the seal member can be suppressed to a small amount, and a volumetric efficiency can be maintained to favorably maintain efficiency of the centrifugal compressor.

### Effects of the Invention

According to the seal structure according to the present invention, the effort needed for the processing can be reduced by suppressing the exciting force and simplifying the configuration.

In addition, according to the centrifugal compressor according to the present invention, the exciting force applied to the rotary body can be suppressed and stably operated, and manufacturing effort can be reduced.

### Brief Description of the Drawings

FIG. 1 is a schematic cross-sectional view of a multi-stage centrifugal compressor 1 according to an embodiment of the present invention.
FIG. 2 is an enlarged cross-sectional view of major parts of the multi-stage centrifugal compressor 1 according to the embodiment of the present invention, showing an enlarged view of a major portion I of FIG. 1.
FIG. 3 is an enlarged cross-sectional view of major parts of the multi-stage centrifugal compressor 1 according to the embodiment of the present invention, showing the vicinity of an outlet section 22b of an impeller 22F.
FIG. 4 is an enlarged cross-sectional view of major parts of the multi-stage centrifugal compressor 1 according to the embodiment of the present invention, showing a cross-sectional view taken along line II-II of FIG. 2.
FIG. 5 is an enlarged cross-sectional view showing major parts of a first variant of the multi-stage centrifugal compressor 1 according to the embodiment of the present invention.
FIG. 6 is an enlarged cross-sectional view showing major parts of a second variant of the multi-stage centrifugal compressor 1 according to the embodiment of the present invention.
FIG. 7 is an enlarged view showing major parts of a seal structure 50a, which is a variant of a seal structure 50 according to the embodiment of the present invention.
FIG. 8 is an enlarged view showing major parts of a seal structure 60a, which is a variant of a seal structure 60 according to the embodiment of the present invention.
FIG. 9 is an enlarged cross-sectional view showing major parts of an example to which the seal structure 50a and the seal structure 60a are applied, in the multi-stage centrifugal compressor 1 according to the embodiment of the present invention.
FIG. 10 is an enlarged cross-sectional view showing major parts of an example to which the seal structure 50 and the seal structure 60a are applied, in the multi-stage centrifugal compressor 1 according to the embodiment of the present invention.
FIG. 11 is an enlarged cross-sectional view showing major parts of an example to which the seal structure 50a and the seal structure 60 are applied, in the multi-stage centrifugal compressor 1 according to the embodiment of the present invention.

### Modes for Carrying out the Invention

Hereinafter, an embodiment of the present invention will be described with reference to the accompanying drawings. In addition, in the drawings used for the following description, in order to make each member or component recognizable, the scale of each member may be appropriately varied.

### (Centrifugal Compressor)

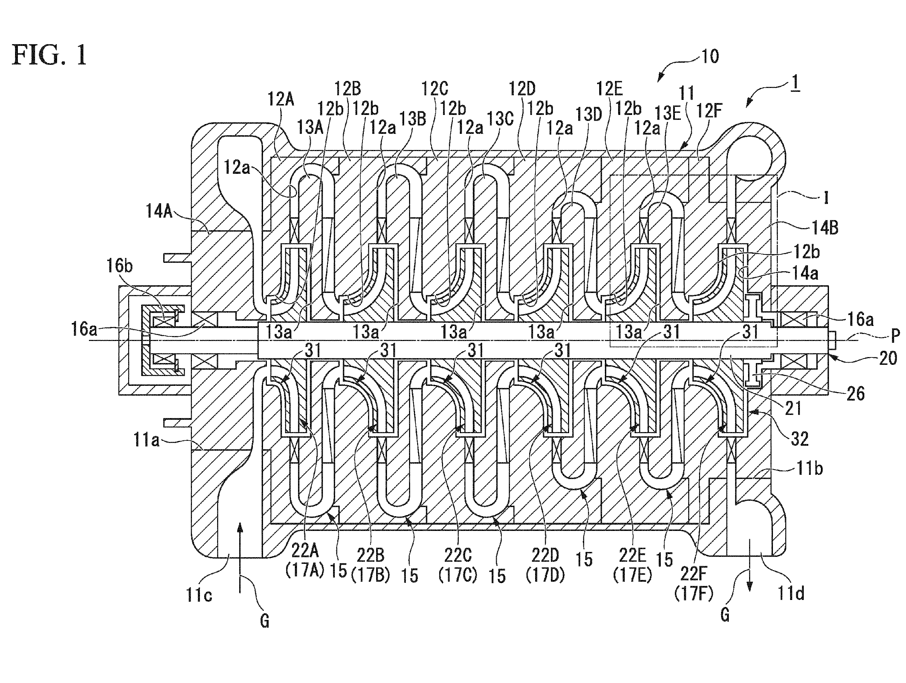

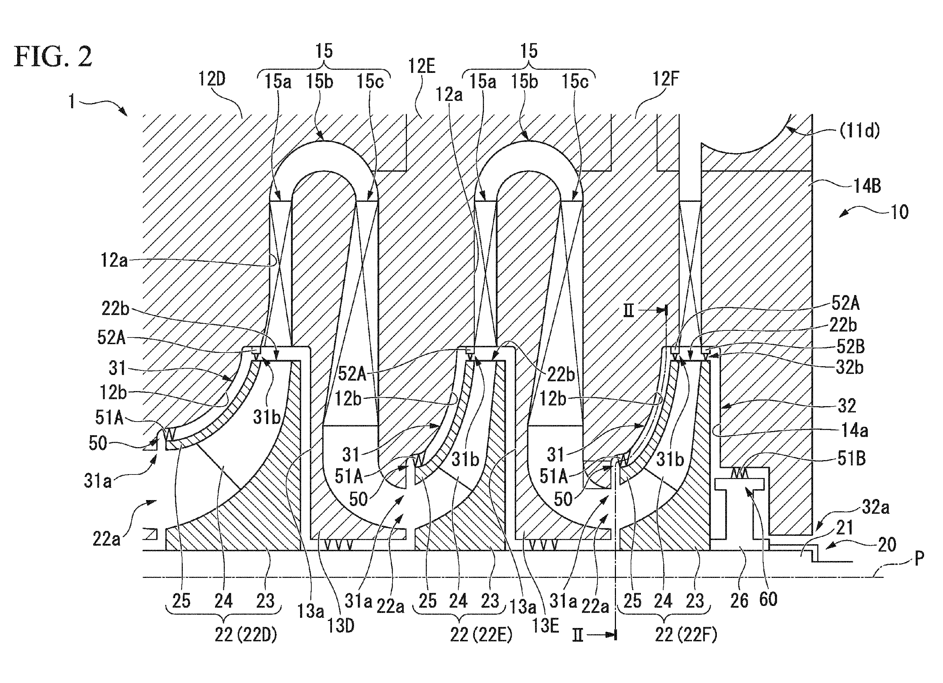

FIG. 1 is a schematic cross-sectional view of a multi-stage centrifugal compressor (centrifugal compressor) 1 according to an embodiment of the present invention, and FIG. 2 is an enlarged view of a major portion I of FIG. 1.
As shown in FIG. 1, the multi-stage centrifugal compressor 1 includes a stationary body 10 having a casing 11 and a plurality of diaphragms 12 (12A to 12F), 13 (13A to 13E), and 14 (14A and 14B), and a rotary body 20 having a rotary shaft 21 and a plurality of impellers 22 (22A to 22F).
In addition, an extending direction of an axis P (a central axis of the rotary shaft 21) of the multi-stage centrifugal compressor 1 is simply referred to as "an axial direction."
As shown in FIG. 1, the casing 11 has a tubular shape, an axis of which overlaps the axis P.

The casing 11 has opening sections 11a formed at both ends in an axial direction thereof, which are closed by the diaphragm 14A and the diaphragm 14B, respectively. The casing 11 has an introduction section 11c formed at one end side in the axial direction and through which a working gas (fluid) G is introduced from the outside, and an ejection section 11d formed at the other end side in the axial direction and through which the working gas G is ejected to the outside.
The casing 11 accommodates the diaphragms 12 (12A to 12F) and 13 (13A to 13E) therein.

As shown in FIG. 1, the diaphragms (inner partition walls) 12A to 12E and 13A to 13E partition impeller accommodating chambers 17A to 17E, which form pairs, and a portion of a flow path of a mainstream of the working gas G. In addition, the diaphragm 12F partitions an impeller accommodating chamber 17F and a portion of the flow path of the mainstream with the diaphragm 14B.
In the description, the diaphragms 12 and 13 that form a pair are designated by the same letter, and the diaphragms 12 and 13 and the impeller accommodating chamber 17 having an accommodating/to be accommodated relationship are designated by the same letter as the impeller 22.

As shown in FIG. 1, the diaphragms 12A to 12E are annular disc-shaped members, and an accommodating recess section 12a is formed at a central side of the other end surface (the other side in the axial direction) (see FIG. 2). A diameter-reducing recess section 12b formed to conform to a shape of a shroud 25 of the impellers 22A to 22E is more deeply formed at a central side of the accommodating recess section 12a of the diaphragms 12A to 12E.
In addition, the diaphragm 12F is an annular disc-shaped member, and the diameter-reducing recess section 12b formed to conform to the shape of the shroud 25 of the impeller 22F is formed at a central side of the other end surface (the other side in the axial direction).
As shown in FIG. 1, the diaphragms 12A to 12F are in continuous contact with each other and accommodated in the axial direction in a state in which the diameter-reducing recess sections 12b thereof are directed to the other side in the axial direction.

The diaphragms 13A to 13E are annular disc-shaped members having a smaller diameter than the diaphragms 12A to 12E, and circular recess sections 13a are formed at one end surfaces thereof (one side in the axial direction) (see FIG. 2). The diaphragms 13A to 13E are accommodated in the accommodating recess sections 12a of the diaphragms 12A to 12E, which form pairs, in the coaxial shape. In this state, the diaphragms 13A to 13E form a gap at the diaphragms 12A to 12E to partition a flow path, and the circular recess section 13a is directed toward the diameter-reducing recess section 12b to partition the impeller accommodating chambers 17A to 17E.
Similarly, in the diaphragm 14B formed of an annular disc-shaped member, a circular recess section 14a is formed at a central side of one end surface (one side in the axial direction), and the circular recess section 14a is directed to the diameter-reducing recess section 12b of the diaphragm 12F to partition the impeller accommodating chamber 17F. In addition, a disposition space of a balance piston 26 (to be described later) is formed at a central side of the circular recess section 14a.

As shown in FIG. 1, a journal bearing 16a and a thrust bearing 16b are disposed at the diaphragm (end partition wall) 14A, the journal bearing 16a is disposed at the diaphragm (end partition wall) 14B, and the bearings rotatably support the rotary shaft 21.

### (Rotary Body)

As shown in FIG. 1, the rotary shaft 21 is inserted through the casing 11 and the diaphragms 12A to 12F and 13A to 13E, and the diaphragms 14A and 14B, and rotatably supported about the axis P.
The balance piston 26 is disposed at the other end side of the rotary shaft 21.

As shown in FIG. 1, six impellers 22A to 22F are installed at the rotary shaft 21 in the axial direction at intervals, and are accommodated in the above-mentioned impeller accommodating chambers 17A to 17F, respectively.
As shown in FIG. 2, each of the impellers 22 includes a disc-shaped hub 23, a plurality of blades 24, and the shroud 25. The hub 23 is gradually increased in diameter from an inlet section 22a to an outlet section 22b of the working gas G. The blades 24 radially extend from an outer circumference of the hub 23, and the shrouds 25 cover outer circumferential ends of the blades 24.

### (Flow Path)

As shown in FIG. 1, in the multi-stage centrifugal compressor 1 constituted by the above-mentioned configuration, the two impellers 22 adjacent to each other in the axial direction are connected to a U-shaped flow path 15. In addition, the inlet section 22a of the impeller 22A of a first stage is in communication with the introduction section 11c of the casing 11, and the outlet section 22b of the impeller 22F of the final stage is in communication with the ejection section 11d of the casing 11 (see FIG. 1).

As shown in FIG. 1, the U-shaped flow path 15 is partitioned as the diaphragm 13 forms a gap at the diaphragm 12 and the neighboring diaphragm 12, which form a pair.
As shown in FIG. 2, the U-shaped flow path 15 includes a diffuser section 15a, a return bend section 15b, and a return section 15c. The diffuser section 15a is connected to the outlet section 22b of the impeller 22, and velocity energy of the mainstream of the working gas G discharged from the impeller 22 is converted into pressure energy. The return bend section 15b is continuously formed at a downstream side of the diffuser section 15a, and reverses a direction of the mainstream flowing toward an outer circumferential side in the radial direction to be directed to a center in the radial direction. The return section 15c is continuously formed at a downstream side of the return bend section 15b, and introduces the mainstream into the impeller 22 of the downstream side.

### (First Clearance, Second Clearance)

In the multi-stage centrifugal compressor 1 formed of the above-mentioned configuration, as shown in FIG. 2, a first clearance (clearance, a first clearance) 31 configured to avoid contact between the shroud 25 and the diaphragm 12 is formed between the shroud 25 of the impeller 22 and the diaphragm 12.
As shown in FIG. 2, the first clearance 31 extends from an upstream side opening 31a opened in the radial direction at the upstream side of the inlet section 22a of the impeller 22 to a downstream side opening 31b opened in the axial direction at the downstream side of the outlet section 22b of the impeller 22, and is formed in a curved shape when seen in a cross-sectional view. More specifically, after extending from the upstream side opening 31a to the outer circumferential side in the radial direction, the first clearance 31 is gradually increased in diameter along the shroud 25 and extends to the other side in the axial direction to the downstream side opening 31b.

Similarly, a second clearance (clearance, a second clearance) 32 is formed between the hub 23 of the impeller 22F of the final stage, the rotary shaft 21, the balance piston 26, and the diaphragm 14B.
The second clearance 32 extends from an inner opening 32b opened in the axial direction at the downstream side of the outlet section 22b in the impeller 22F of the final stage to an outer opening 32a in communication with the outside of the casing 11, and has a curved shape when seen in a cross-sectional view. More specifically, after extending from the inner opening 32b to the other side in the axial direction, the second clearance 32 is bent after extending along the hub 23 and the diaphragm 14B to a central side in the radial direction, extends along the balance piston 26 and the diaphragm 14B to the other side in the axial direction, and comes in communication with the outer opening 32a.

### (Seal Structure)

The multi-stage centrifugal compressor 1 has a seal structure 50 and a seal structure 60 configured to seal the first clearance 31 and the second clearance 32. In addition, in FIG. 1, illustration of the seal structures 50 and 60 is omitted.

The seal structure 50 includes a labyrinth seal (seal member) 51A, and a shifting member 52A.
The labyrinth seal 51A is constituted by a plurality of annular fin members fixed to the diaphragm 12. The labyrinth seal 51A is disposed at the downstream side opening 31b side of a portion of the first clearance 31, which is gradually increased in diameter along the shroud 25. In the labyrinth seal 51A, each of the fin members extends from the diaphragm 12 toward the central side in the radial direction, and a micro gap in the radial direction is formed between a tip of each of the fin members and the shroud 25.

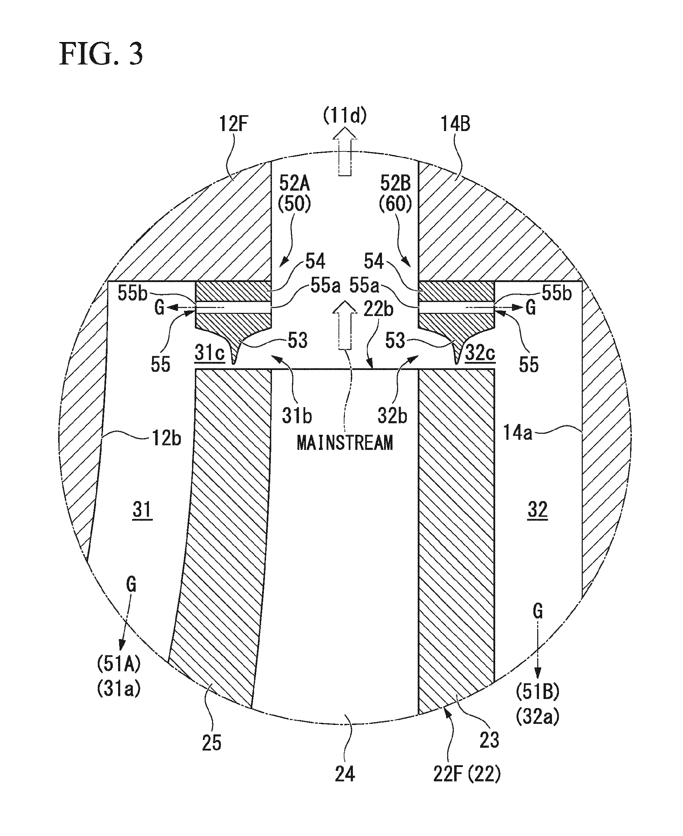

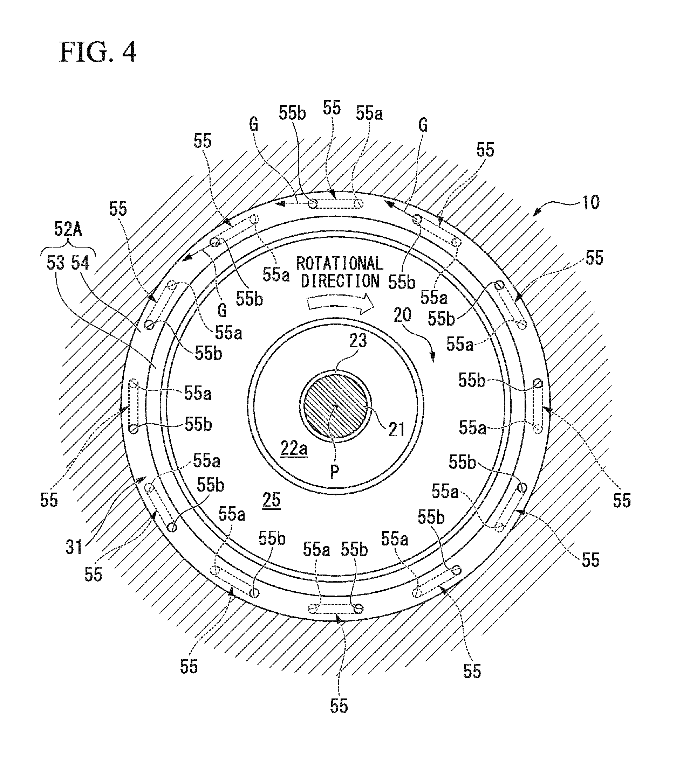

FIG. 3 is an enlarged cross-sectional view of major parts of FIG. 2, and FIG. 4 is a cross-sectional view taken along line II-II of FIG 2. In FIG. 4, illustration of the labyrinth seal 51A is omitted.
The shifting member 52A is an annular member, which is disposed at a portion (a gas inlet section 31c) of the first clearance 31 extending from the downstream side opening 31b to one side in the axial direction (see FIG. 3). That is, as shown in FIGS. 3 and 4, the shifting member 52A is disposed at a position of the first clearance 31 at which the shroud 25 of the impeller 22 and the diaphragm 12 oppose each other in the radial direction.

The shifting member 52A has a passage block section 53 formed at the impeller 22 side (an outer circumferential side), and a shifting section 54 formed at the diaphragm 12 side (an inner circumferential side).
The passage block section 53 is continuously formed at the shifting section 54, extends from the shifting section 54 toward the shroud 25 of the impeller 22, and forms a micro gap in the radial direction between one tip having a sharp shape and the shroud 25.

The outer circumferential side of the shifting section 54, as shown in FIG. 3, is fixed to the diaphragm 12, and as shown in FIG. 4, a plurality of through-holes 55 passing through the mainstream side and the labyrinth seal 51A are formed in the shifting section 54. The plurality of through-holes 55 are perforated at equal intervals in the circumferential direction.
As shown in FIG. 4, each of the through-holes 55 has a circular cross-sectional shape, and straightly extends from an aperture 55a of the mainstream side to an aperture 55b of the labyrinth side. In addition, the through-holes 55 are formed at a position at which the aperture 55b of the labyrinth seal 51A side is slightly deviated in a reverse direction of a normal rotational direction with respect to the aperture 55a of the mainstream side. In addition, while the through-holes 55 of FIG. 3 should be shown by dotted lines inherently, for the purpose of easy understanding, the through-holes are shown by solid lines.

The seal structure 60 includes a labyrinth seal (seal member) 51B and a shifting member 52B.
As shown in FIG. 2, a labyrinth seal 51B has the same configuration as the labyrinth seal 51A, is fixed to an outer circumference of the balance piston 26, and forms a micro gap in the radial direction between tips of the plurality of annular fin members extending from the balance piston 26 to the diaphragm 14B and the diaphragm 14B.

As shown in FIG. 3, the shifting member 52B has the same configuration as the shifting member 52A, and as shown in FIG. 2, is disposed at a portion (a gas inlet section 32c) of the second clearance 32 extending from the inner opening 32b to the other side in the axial direction. That is, the shifting member 52B is disposed at a position of the second clearance 32 at which the impeller 22F and the diaphragm 14B oppose each other in the radial direction of the impeller 22F.

Next, an exciting force reducing operation of the seal structures 50 and 60 having the above-mentioned configuration will be described with reference to the accompanying drawings.
As shown in FIG. 1, when the rotary body 20 is rotated, the working gas G flowed from the introduction section 11c alternately flows through the impellers 22A to 22F and the U-shaped flow path 15 to be compressed stepwise, and the working gas G which reaches a high pressure is ejected from the ejection section 11d to the outside.

In the mainstream passing through the impeller 22, since velocity energy and pressure energy are applied by rotation of the impeller 22, a pressure after discharge from the impeller 22 becomes high in comparison with a pressure before introduction into the impeller 22, and a pressure gradient occurs in the downstream side opening 31b and the upstream side opening 31 a of the first clearance 31.
For this reason, some of the working gas G in the mainstream discharged from the impeller 22 is flowed into the first clearance 31 via the downstream side opening 31b and the shifting member 52A. Then, the working gas G flowed into the first clearance 31 is divided into a high pressure side and a low pressure side as the passage to the upstream side opening 31a side is blocked by the labyrinth seal 51A.

Here, when the working gas G is flowed into the first clearance 31, as shown in FIG. 3, the passage block section 53 of the shifting member 52A forms a micro gap with the shroud 25 of the impeller 22 and blocks the passage of the working gas G. For this reason, the working gas G passes through the through-hole 55 of the shifting section 54 and flows into the first clearance 31.
Here, while the working gas G discharged from the impeller 22 has a velocity component in the normal rotational direction by rotation of the impeller 22, a velocity component in a reverse direction of the normal rotational direction is applied by passing the through-hole 55 of the shifting section 54. More specifically, a velocity component in the reverse direction with respect to a tangential vector in the normal rotational direction is applied.
As a result, the velocity component in the normal rotational direction of the working gas G is negated and reduced.

The working gas G passing through the shifting member 52A flows through the first clearance 31 to arrive at the labyrinth seal 51A.
Here, since the velocity component in the normal rotational direction of the working gas G is negated and reduced, an exciting force applied to the rotary body 20 by the working gas G flowing through the first clearance 31 is slight.
Further, since the velocity component in the normal rotational direction of the working gas G arriving at the labyrinth seal 51A is reduced, an exciting force applied to the rotary body 20 by the working gas G flowing through the labyrinth seal 51A is slight.

Additionally, since the mainstream (see FIG. 3) of the working gas G passing through the impeller 22F of the final stage reaches a higher pressure than the atmospheric pressure, a pressure gradient is generated at the inner opening 32b and the outer opening 32a of the second clearance 32, and the working gas G flows into the second clearance 32 via the inner opening 32b and the shifting member 52B.
The working gas G flowing into the second clearance 32 passes through the through-hole 55 of the shifting section 54 to flow into the second clearance 32, the velocity component in the reverse direction of the normal rotational direction is applied, and thus, the velocity component in the normal rotational direction is negated and reduced (see FIGS. 2 and 3).

The working gas G passing through the shifting member 52B flows through the second clearance 32 to arrive at the labyrinth seal 51B.
Here, since the velocity component in the normal rotational direction of the working gas G is negated and reduced, an exciting force applied to the rotary body 20 by the working gas G flowing through the second clearance 32 is slight.
Further, since the velocity component in the normal rotational direction of the working gas G arriving at the labyrinth seal 51B is reduced, an exciting force applied to the rotary body 20 by the working gas G passing through the labyrinth seal 51B is slight.

As described above, according to the seal structures 50 and 60, since the shifting members 52A and 52B configured to allow passage of the working gas G and reduce the velocity component in the normal rotational direction are provided, the velocity component in the normal rotational direction of the working gas G passing through the shifting members 52A and 52B and arriving at the labyrinth seals 51A and 51B is reduced. Accordingly, since the velocity component in the normal rotational direction of the working gas G passing through the labyrinth seals 51 A and 51B is reduced, an exciting force applied to the rotary body 20 can be suppressed.
Further, since the exciting force applied to the rotary body 20 is suppressed by installing the shifting members 52 (52A and 52B), in comparison with the case in which the passage of the working gas G is formed at the diaphragms 12 and 14B, the configuration can be simplified and effort needed for the processing can be reduced.
In addition, when the passage of the working gas G is formed and the working gas G having a high pressure is supplied to the labyrinth seals 51 A and 51B to reduce the velocity component in the normal rotational direction of the working gas G, since a differential pressure between the high pressure side and the low pressure side of the working gas G divided by the labyrinth seals 51 A and 51B is increased, an amount of the working gas G passing through the labyrinth seals 51A and 51B is increased. According to the seal structures 50 and 60, since the differential pressure is reduced in comparison with the case in which the high pressure working gas G is supplied to the labyrinth seals 51A and 51B, the working gas G passing through the labyrinth seals 51A and 51B can be suppressed to a small amount. Accordingly, volumetric efficiency can be maintained to favorably maintain efficiency of the multi-stage centrifugal compressor 1.

In addition, since the shifting members 52A and 52B apply the velocity component in the reverse direction of the normal rotational direction to the working gas G, the velocity component in the normal rotational direction of the working gas G can be further reduced, and the exciting force applied to the rotary body 20 can be further suppressed.

Further, the shifting members 52A and 52B are installed at gas inlet sections 31c and 32c into which the working gas G flows from the mainstream side to the first clearance 31 and the second clearance 32. Here, as the velocity component in the normal rotational direction is reduced when the working gas G flows into the first clearance 31 and the second clearance 32, the velocity component in the normal rotational direction of the working gas G from the gas inlet sections 31c and 32c toward the labyrinth seals 51A and 51B is reduced. Accordingly, the exciting force generated when the working gas G having the velocity component in the normal rotational direction is directed from the gas inlet sections 31c and 32c toward the labyrinth seals 51A and 51B, and the exciting force generated when passing through the labyrinth seals 51A and 51B are reduced. Accordingly, the exciting force applied to the rotary body 20 can be largely suppressed.

In addition, since the shifting members 52A and 52B are installed at the diaphragms 12 and 14B, necessity of adjusting a rotational balance of the rotary body 20 like the case in which the shifting members 52A and 52B are installed at the impeller 22 is removed, and an effort needed for the processing can be further reduced.

Further, since the shifting members 52A and 52B include the passage block section 53 configured to block the passage of the working gas G, and the shifting section 54 having the through-hole 55 passing through the mainstream side and the side of the labyrinth seals 51A and 51B, the configuration of the shifting members 52A and 52B can be further simplified.

In addition, since the aperture 55a of the mainstream side is slightly deviated in the reverse direction of the rotational direction with respect to the aperture 55b of the side of the labyrinth seals 51A and 51B, the through-hole 55 can apply the velocity component in the reverse direction of the normal rotational direction to the working gas G.

Further, since the shifting member 52A is installed at a position at which the impeller 22 and the diaphragm 12 of the first clearance 31 oppose each other in the radial direction, when a relative displacement in the radial direction of the impeller 22 and the diaphragm 12 due to a centrifugal force or heat growth is smaller than that in the axial direction due to a thrust force or heat growth, probability of contact of the shifting member 52A with the impeller 22 can be reduced.
In addition, in comparison with the case in which the shifting member 52A is installed at a position at which the impeller 22 and the diaphragm 12 oppose each other in the axial direction, a relative position between the shifting member 52A and the impeller 22 disposed at the diaphragm 12 upon assembly can be easily determined, and manufacturing effort can be reduced.
Similarly, since the shifting member 52B is installed at a position of the second clearance 32 at which the impeller 22F and the diaphragm 14B oppose each other in the radial direction, the same effects as the above-mentioned effect can be obtained.

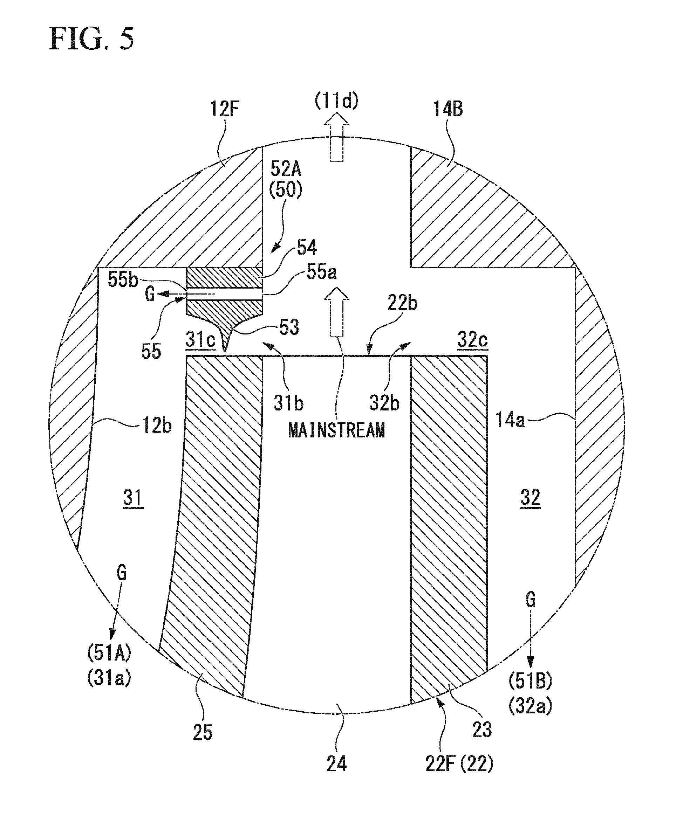

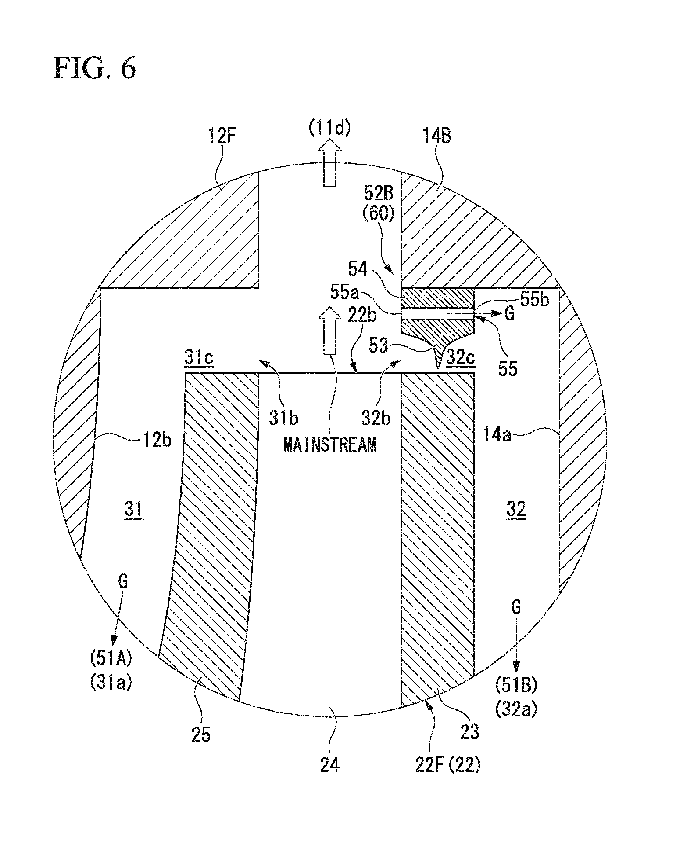

In the above-mentioned configuration, while the seal structure 50 is applied to the first clearance 31 and the seal structure 60 is applied to the second clearance 32, any one of the seal structures 50 and 60 may be omitted so that only the seal structure 50 may be applied as shown in FIG. 5 or only the seal structure 60 may be applied as shown in FIG. 6.

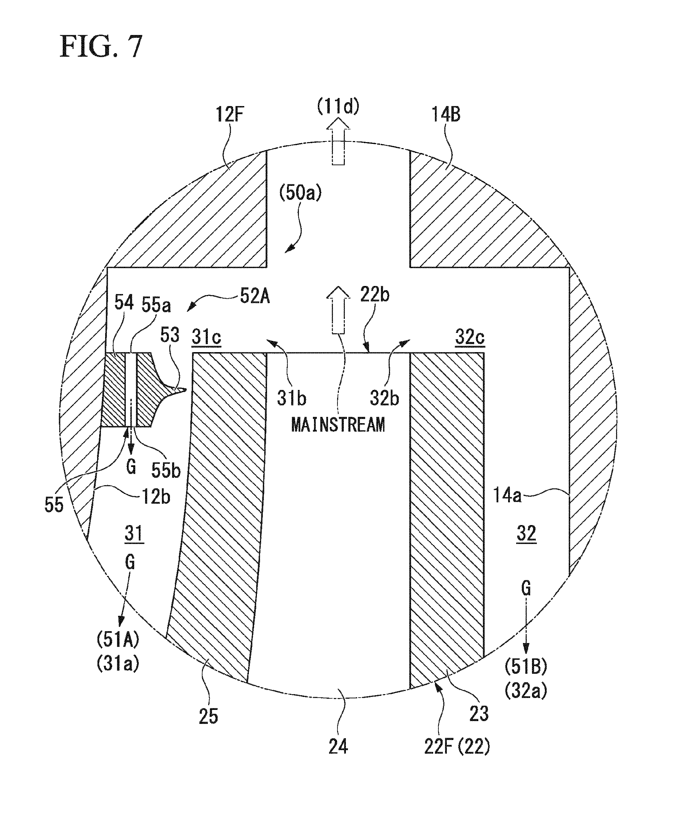

FIG. 7 is an enlarged view showing major parts of the seal structure 50a, which is a variant of the seal structure 50.
The seal structure 50a has a different disposition place of the shifting member 52A from the seal structure 50. Specifically, while the shifting member 52A is disposed at a position of the first clearance 31 at which the shroud 25 of the impeller 22 and the diaphragm 12 oppose each other in the radial direction in the seal structure 50, in contrast, the shifting member 52A is disposed at a position of the first clearance 31 at which the shroud 25 of the impeller 22 the diaphragm 12 oppose each other in the axial direction in the seal structure 50a.

According to the seal structure 50a, when a relative displacement in the axial direction of the impeller 22 and the diaphragm 12 due to a thrust force or heat growth is smaller than that in the radial direction due to a centrifugal force or heat growth, probability of contact of the shifting member 52A with the impeller 22 can be reduced.

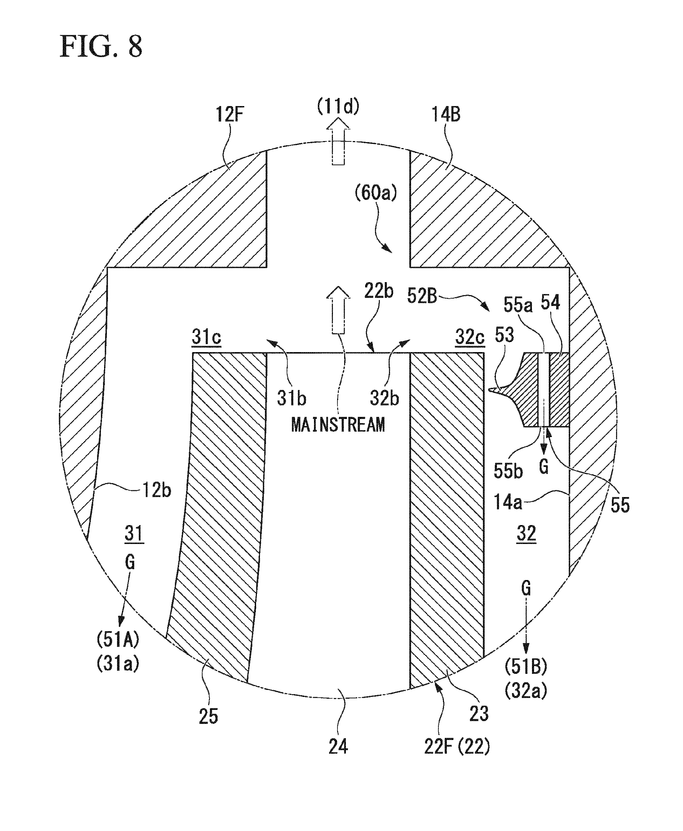

FIG. 8 is an enlarged view showing major parts of the seal structure 60a, which is a variant of the seal structure 60.
As shown in FIG. 8, while the shifting member 52B is disposed at a position of the second clearance 32 at which the hub 23 of the impeller 22 and the diaphragm 14B oppose each other in the radial direction in the seal structure 60, in contrast, the shifting member 52B is disposed at a position of the second clearance 32 at which the hub 23 of the impeller 22 and the diaphragm 14B oppose each other in the axial direction in the seal structure 60a.
Even according to the above-mentioned configuration, the same configuration as the above-mentioned seal structure 50a can be obtained.

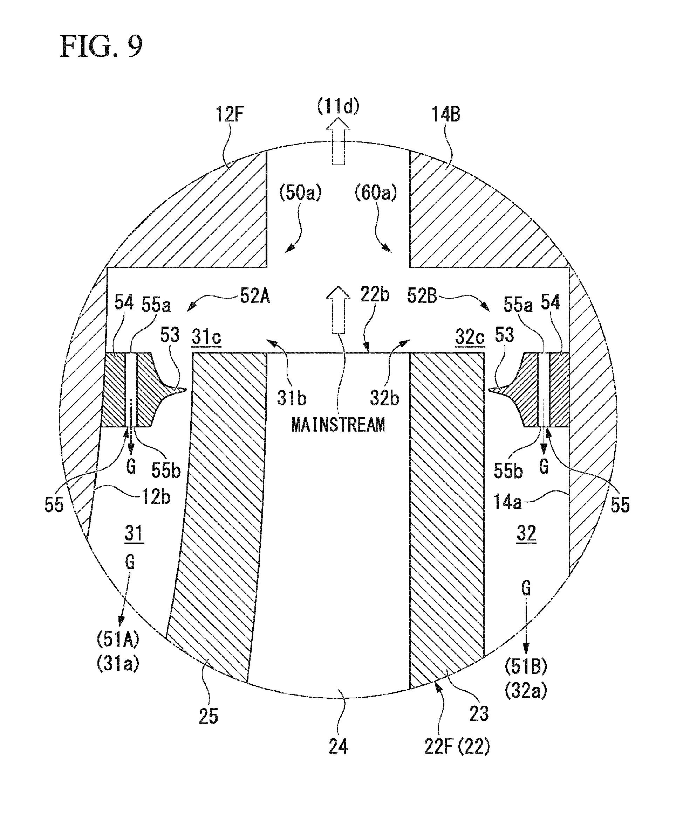

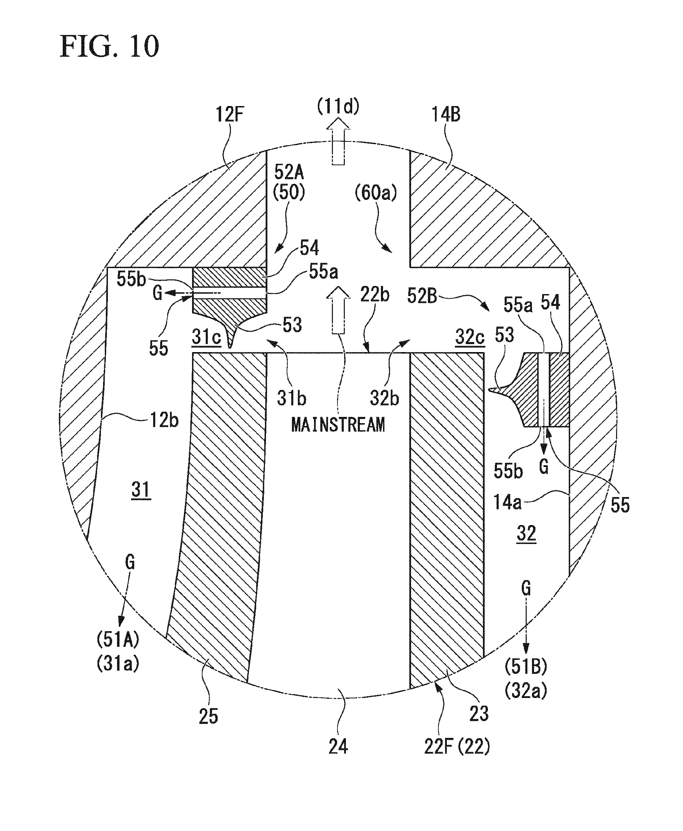

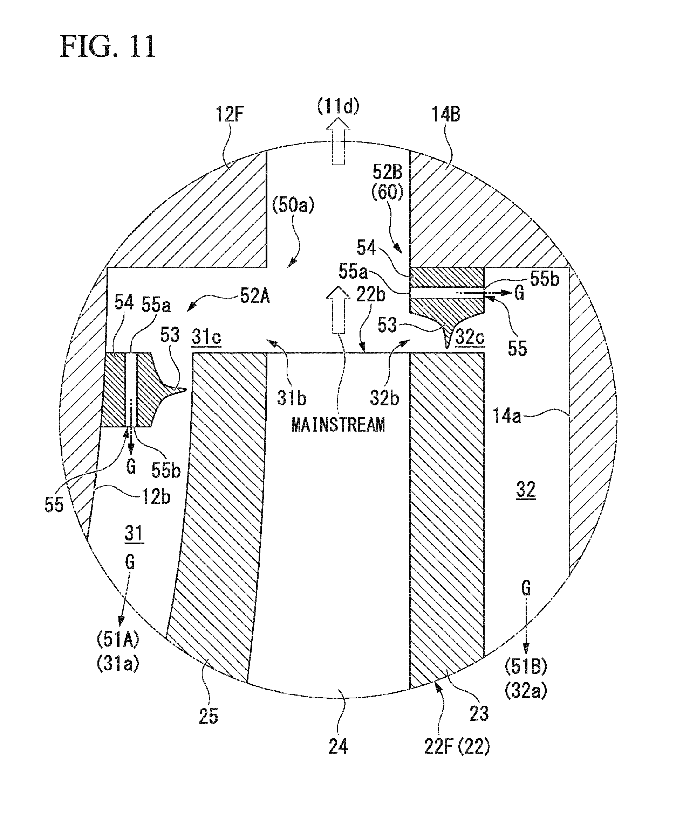

FIGS. 9 to 11 are enlarged cross-sectional views showing major parts of variants of the seal structures 50 and 50a and the seal structures 60 and 60a.
For example, in the above-mentioned configuration, while the seal structure 50 is applied to the first clearance 31 and the seal structure 60 is applied to the second clearance 32, as shown in FIG. 9, the seal structure 50a may be applied to the first clearance 31 and the seal structure 60a may be applied to the second clearance 32.
In addition, as shown in FIG. 10, the seal structure 50 may be applied to the first clearance 31 and the seal structure 60a may be applied to the second clearance 32, and as shown in FIG. 11, the seal structure 50a may be applied to the first clearance 31 and the seal structure 60 may be applied to the second clearance 32.

Further, an operation procedure, a shape or combination of the components described in the embodiment is one example, and they may be varied based on design requirements without departing from the scope of the present invention.
For example, in the above-mentioned embodiment, the shifting members 52A and 52B apply the velocity component in the reverse direction of the normal rotational direction to the working gas G. Here, when the velocity component in the normal rotational direction is reduced, since the velocity component in the normal rotational direction of the working gas G passing through the labyrinth seals 51A and 51B is reduced, an exciting force suppressing effect of the rotary body 20 can be obtained.

In addition, in the above-mentioned embodiment, while a cross-sectional shape of the through-hole 55 is a circular shape, the cross-sectional shape of the through-hole 55 may have an elliptical or polygonal shape. Similarly, the through-hole 55 may have a curved shape, not limited to the straight shape.
Further, when seen in the axial direction, the through-hole 55 may extend only in a rotational tangential direction. Furthermore, as described above, when the velocity component in the normal rotational direction is reduced, since the exciting force suppressing effect of the rotary body 20 can be obtained, the through-hole 55 may extend only in the radial direction.

In addition, in the above-mentioned embodiment, while the shifting members 52A and 52B are positioned at the downstream side opening 31b side and the inner opening 32b side, respectively, while disposed at a higher pressure side of the working gas G than the labyrinth seals 51A and 51B, the shifting members may be disposed at the upstream side opening 31a side and the outer opening 32a side.
Further, positions of the labyrinth seals 51A and 51B may be appropriately varied.

Furthermore, in the above-mentioned embodiment, a tip of the passage block section 53 formed in a sharp shape may be one or more.

In addition, in the above-mentioned embodiment, while the labyrinth seal is used as the seal member, the seal member may have another configuration, or a brush seal or a honeycomb seal, or a shaft seal mechanism in which thin plates are stacked in the circumferential direction may be used.

Further, in the above-mentioned embodiment, while the shifting members 52A and 52B are disposed at the stationary body 10 side, the shifting members 52A and 52B may be disposed at the rotary body 20 side.

Furthermore, in the above-mentioned embodiment, while the present invention is applied to the multi-stage centrifugal compressor 1, the present invention may be applied to a single stage centrifugal compressor.
In addition, in the above-mentioned embodiment, while the seal structure according to the present invention is applied to the centrifugal compressor, the seal structure may be applied to another fluid machine.

### [Industrial Applicability]

The present invention relates to a seal structure configured to seal a clearance with respect to a flow path defined by a rotary body rotated about a central shaft and through which a mainstream passes and a stationary body disposed at the rotary body to form the clearance therebetween, the seal structure including: a seal member installed at the clearance and configured to divide a fluid introduced into the clearance from the mainstream into a high pressure side and a low pressure side; and a shifting member installed at the high pressure side of the fluid in the clearance and configured to allow passage of the fluid and reduce a velocity component in a rotational direction of the rotary body in the velocity component of the fluid.
According to the present invention, since the fluid passes through the seal member in a state in which the velocity component in the normal rotational direction is reduced, an exciting force applied to the rotary body can be suppressed.

### Description of Reference Numerals

1...multi-stage centrifugal compressor (centrifugal compressor)
10... stationary body
11... casing
12 (12A to 12F)...diaphragm (inner partition wall)
14 (14A, 14B)...diaphragm (end partition wall)
20...rotary body
21...rotary shaft
22 (22A to 22F)...impeller
23...hub
24...blade
25... shroud
31... first clearance (clearance, first clearance)
31c, 32c...gas inlet section (fluid inlet section)
32... second clearance (clearance, second clearance)
50, 50a, 60, 60a...seal structure
51A, 51B...labyrinth seal (seal member)
52 (52A, 52B)...shifting member
53...passage block section
54... shifting section
55... through-hole
55a... aperture
55b... aperture
G...working gas (fluid)
P...central shaft

## Claims

1. A seal structure for sealing a clearance between a rotary body rotated around an axis and a stationary body disposed adjacent to the rotary body, in which a mainstream of a fluid passes through a passage formed by the rotary body and the stationary body, the seal structure comprising:
a seal member installed at the clearance and configured to divide a fluid flowed into the clearance from the mainstream into a high pressure fluid and a low pressure fluid; and
a shifting member installed at an area of the high pressure fluid in the clearance, and configured to allow passage of the fluid and reduce a velocity component in a rotational direction of the rotary body in the velocity component of the fluid.

2. The seal structure according to claim 1, wherein the shifting member applies a velocity component in a reverse direction of the rotational direction to the fluid.

3. The seal structure according to claim 1 or 2, wherein the shifting member is installed at a fluid inlet section into which the fluid flows from the mainstream side to the clearance.

4. The seal structure according to any one of claims 1 to 3, wherein the shifting member is installed at the stationary body side.

5. The seal structure according to claim 4, wherein the shifting member has a passage block section formed at the rotary body side and configured to block passage of the fluid, and
a shifting section formed at the stationary body side, and having a through-hole passing through the mainstream side and the seal member side and formed at a position at which an aperture of the mainstream side is slightly deviated in the reverse direction of the rotational direction with respect to an aperture of the seal member side.

6. The seal structure according to any one of claims 1 to 5, wherein the shifting member is installed at a position of the clearance in which the rotary body and the stationary body oppose each other in the radial direction of the rotary body.

7. A centrifugal compressor having a flow path defined by a rotary body and a stationary body,
wherein the rotary body includes an impeller having a disc-shaped hub, a plurality of blades extending from the hub, and a shroud configured to cover outer circumferential ends of the plurality of blades, and
the stationary body includes a casing configured to accommodate the impeller, and an inner partition wall configured to partition the flow path into a low pressure side and a high pressure side of the mainstream,
the centrifugal compressor including:
a seal structure according to any one of claims 1 to 6, the seal structure configured to seal a first clearance formed between the shroud of the impeller and the inner partition wall.

8. A centrifugal compressor having a flow path defined by a rotary body and a stationary body,
wherein the rotary body includes an impeller having a disc-shaped hub and a plurality of blades extending from the hub, and
the stationary body includes a casing configured to accommodate the impeller, and an end partition wall configured to partition the inside and the outside of the casing,
the centrifugal compressor including:
a seal structure according to any one of claims 1 to 6, the seal structure configured to seal a second clearance formed between the hub of the impeller and the end partition wall.

9. A centrifugal compressor having a flow path defined by a rotary body and a stationary body,
wherein the rotary body includes an impeller having a disc-shaped hub, a plurality of blades extending from the hub, and a shroud configured to cover outer circumferential ends of the plurality of blades, and
the stationary body includes a casing configured to accommodate the impeller, an inner partition wall configured to partition the flow path into a low pressure side and a high pressure side of the mainstream, and an end partition wall configured to partition the inside and the outside of the casing,
the centrifugal compressor including:
a seal structure according to any one of claims 1 to 6, the seal structure configured to seal a first clearance formed between the shroud of the impeller and the inner partition wall, and a second clearance between the hub of the impeller and the end partition wall.
